# EUROPÄISCHE PATENTSCHRIFT

(11) **EP 1 223 002 B1**
(45) Veröffentlichungstag und Bekanntmachung des Hinweises auf die Patenterteilung: **14.04.2004**
(21) Anmeldenummer: 01126849.7
(22) Anmeldetag: 12.11.2001
(51) Int. Cl.: B23Q 7/04, B23Q 37/00, B25B 11/00, B23Q 3/16, B21J 15/42

(54) **Halteeinrichtung zum Halten von grossformatigen Bauteilen**
Holding device for holding large structures
Dispositif de retenue pour maintenir en position des structures de grande dimension

(30) Priorität: 16.01.2001 DE 10101916; 18.07.2001 DE 10134852
(43) Veröffentlichungstag der Anmeldung: 17.07.2002
(73) Patentinhaber: Airbus Deutschland GmbH, 21129 Hamburg (DE); Brötje-Automation GmbH, 26215 Wiefelstede (DE)
(72) Erfinder: Wolf, Manfred, 26954 Nordenham (DE); Eisenhauer, Fredo, 26969 Bujadingen (DE); Holtmeier, Gerhard, 23564 Lübeck (DE); Plümer, Hartwig, 26160 Bad Zwischenahn (DE)
(74) Vertreter: Hansmann, Dierk, Dipl.-Ing.

(56) Entgegenhaltungen:
- WO-A-99/46079
- DE-A- 19 745 145
- US-A- 5 604 974

## Beschreibung

Die Erfindung betrifft eine Halteeinrichtung zum Halten von großformatigen Bauteilen, wobei die Halteeinrichtung als flexibles Spannsystem ausgebildet ist und mehrere Spanneinheiten aufweist. Die Erfindung betrifft weiterhin eine Bearbeitungsmaschine mit einer solchen Halteeinrichtung, ein Verfahren zum Aufrüsten und Halten von großformatigen Bauteilen, wobei eine Bauteilbearbeitung mit einer Bearbeitungsmaschine mit einem oberen und einem unteren Werkzeug erfolgt, die mit einer Halteeinrichtung zum Halten von großformatigen Bauteilen in Wirkverbindung steht und ein Verfahren zum Beladen der Halteeinrichtung.

Es sind flexible Spannsysteme beispielsweise aus DE 197 45 145 A 1 bekannt. Dieses Dokument zeigt eine Maschine zum Halten von Bauteilen, die aus mehreren Einheiten besteht, wobei jede Einheit auf Schienen verfahrbare Bögen aufweist und mehrere Bögen zur Aufnahme eines oder mehrerer großformatiger Bauteile vorgesehen sind. Die beiden äußeren Bögen einer derartigen Trägereinheit sind fest mit den Schienen verbunden und die gesamte Trägereinheit ist für Rüstvorgänge mit einem Ladekran umsetzbar. Ein auf der Trägereinheit fixiertes Bauteil bzw. mehrere so gespannte Bauteile werden über ein weiteres Schienensystem in eine Nietmaschine hineingeschoben und die Einheit wird in einer festen Position fixiert. Um während des Nietvorganges eine Kollision zwischen Elementen der Nietmaschine und Elementen des Haltesystems zu vermeiden, können die betroffenen Bögen an eine andere Position verlagert werden. Das wird realisiert, indem die Teleskopstangen zurückgezogen werden und der betroffende Bogen auf den Schienen verfahren wird. Während dieser Zeit ruht der Nietprozess. Auch ist im gesamten Bereich des frei gewordenen Bogens die Unterstützung bzw. Fixierung des Bauteils aufgehoben. Nach dem Nietvorgang wird der gesamte Bauteilträger aus der Nietmaschine herausgeschoben und es können weitere Arbeiten am Bauteil vorgenommen werden bzw. der Bauteilträger wird umgesetzt und das Bauteil wird von der Trägereinheit abgerüstet.

Bekannte Lösungen bauen somit auf anlagentechnisch vorhandene Trägersysteme wie Wechsel- und/oder Positionierrahmen, Vorrichtungsgerüste, Fügestationen, Portalsysteme, Rüsttischsysteme auf. Zum Teil müssen die Rüst- und Positioniervorgänge nach komplexen technischen und zeitlichen Regelungen abgewickelt werden. Darüber hinaus sind hohe Investitionen in der Anlagentechnik notwendig, insbesondere wenn ein großes Bauteilspektrum mit unterschiedlichen Abmessungen und Formen abzudecken ist. Die Anlagenbeschickung erfolgt üblicherweise durch den Einsatz weiterer Subsysteme wie Bühnenkonstruktionen, Transferwagen, Hubbühnen, Förderkörbe u.a., wobei aufgrund der Abmessungen (für Hautfelder eines Flugzeugrumpfes ungefähr bis Größe 11 x 3 m) und möglichen Krümmungen der zu fügenden großformatigen Bauteile ein hoher logistischer Aufwand betrieben werden muss.

Der Erfindung liegt daher die Aufgabe zugrunde, eine Vorrichtung zum Halten von großformatigen Bauteilen auszubilden, wobei der Aufwand für die Anlagentechnik durch Verzicht auf starre Trägersysteme mit geometriebestimmten Vorrichtungen verringert und ein flexibles Spannen von Werkstücken unterschiedlicher Form und Größe erreicht werden soll.

Diese Aufgabe wird bei einer gattungsgemäßen Halteeinrichtung mit den im Patentanspruch 1 genannten Maßnahmen gelöst.

Weiterbildungen und vorteilhafte Ausgestaltungen sind in den Unteransprüchen 2 bis 19 angegeben sowie in der nachfolgenden Beschreibung dargestellt.

Eine Bearbeitungsmaschine, die mit einer patentgemäßen Halteeinrichtung koppelbar ist, ist im Patentanspruch 20 angegeben.
Ein Verfahren zum Bearbeiten eines großformatigen Bauteils sowie ein Verfahren zum Beladen der Halteeinrichtung mit einem großformatigen Bauteil sind in den Ansprüchen 21 und 22 angegeben.

Mit der erfindungsgemäßen Vorrichtung wird ermöglicht, dass flexibel auf unterschiedliche Anforderungen im Fertigungsprozess (Umstellung auf andere Bauteilabmessungen u. a.) reagiert werden kann und eine Verminderung der Rüstzeit ermöglicht wird. Weiterhin sind folgende Vorteile zu erreichen:
- Verzicht auf Trägersysteme
- Vermeidung des Einsatzes von Subsystemen
- Verbesserung der Ergonomie bei Rüstvorgängen
- Erhöhung der Flexibilität des Spannsystems, d.h. Turmlösung, Einsatz von weiteren möglichen Hilfsachsen, Abdeckung von Bauteilspektren mit größtmöglichen Abmessungen (sphärisch, Anschwellung)

In der Zeichnung ist ein Ausführungsbeispiel der Erfindung dargestellt, welches nachstehend anhand der Figuren 1 bis 11 näher beschrieben wird.

Es zeigt:
- Fig. 1: eine perspektivische Darstellung der erfindungsgemäßen Halteeinrichtung,
- Fig. 2: die Halteeinrichtung gemäß Fig. 1 in Wirkverbindung mit einer Bearbeitungsmaschine,
- Fig. 3: die Halteeinrichtung in einer Zwei-Seiten-Ansicht,
- Fig. 4: eine erste Spanneinheit als vorderer Teil der Halteeinrichtung,
- Fig. 5: eine achte Spanneinheit als letzter Teil der Halteeinrichtung,
- Fig. 6: eine Spanneinheit als Einzelheit aus dem mittleren Teil der Halteeinrichtung,
- Fig. 7: eine Klemmeinheit als Bestandteil einer Spanneinheit,
- Fig. 8: eine Fixiereinheit als Bestandteil einer Spanneinheit,
- Fig. 9: eine äußere Saugeinheit als Bestandteil einer Spanneinheit,
- Fig. 10: eine schwenkbare Saugeinheit als Bestandteil einer Spanneinheit und
- Fig. 11: eine äußere Beladeaufnahme als Bestandteil einer Spanneinheit.

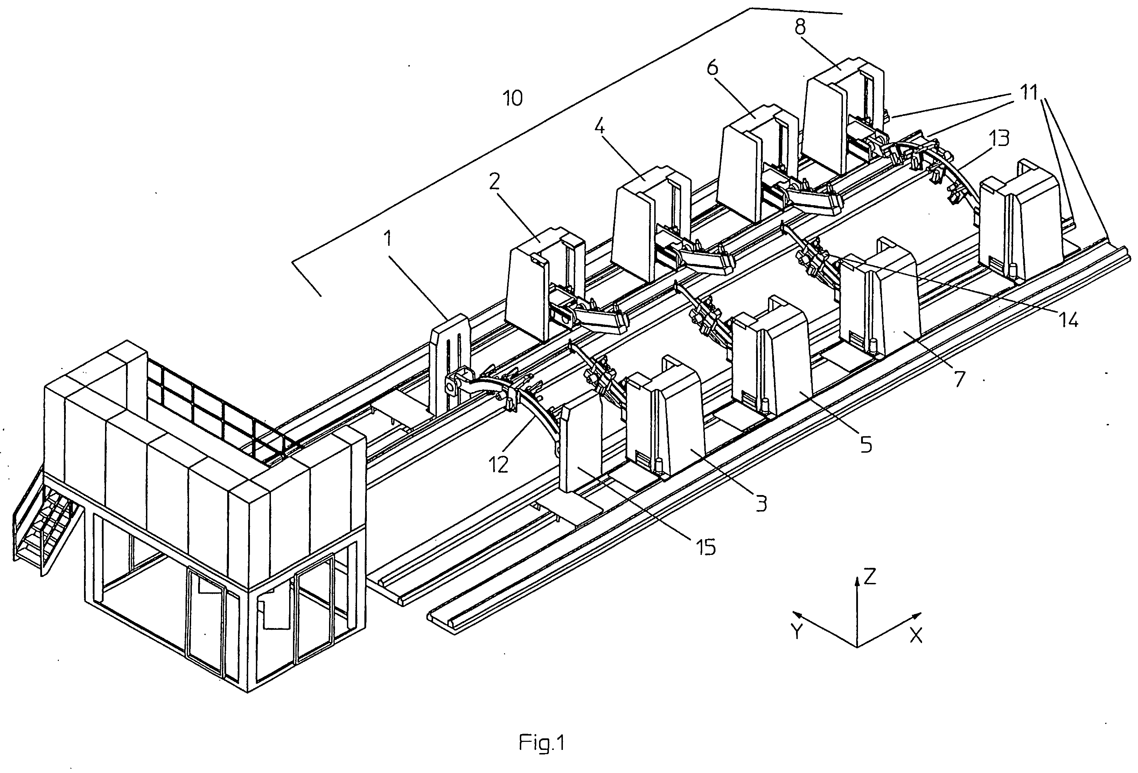

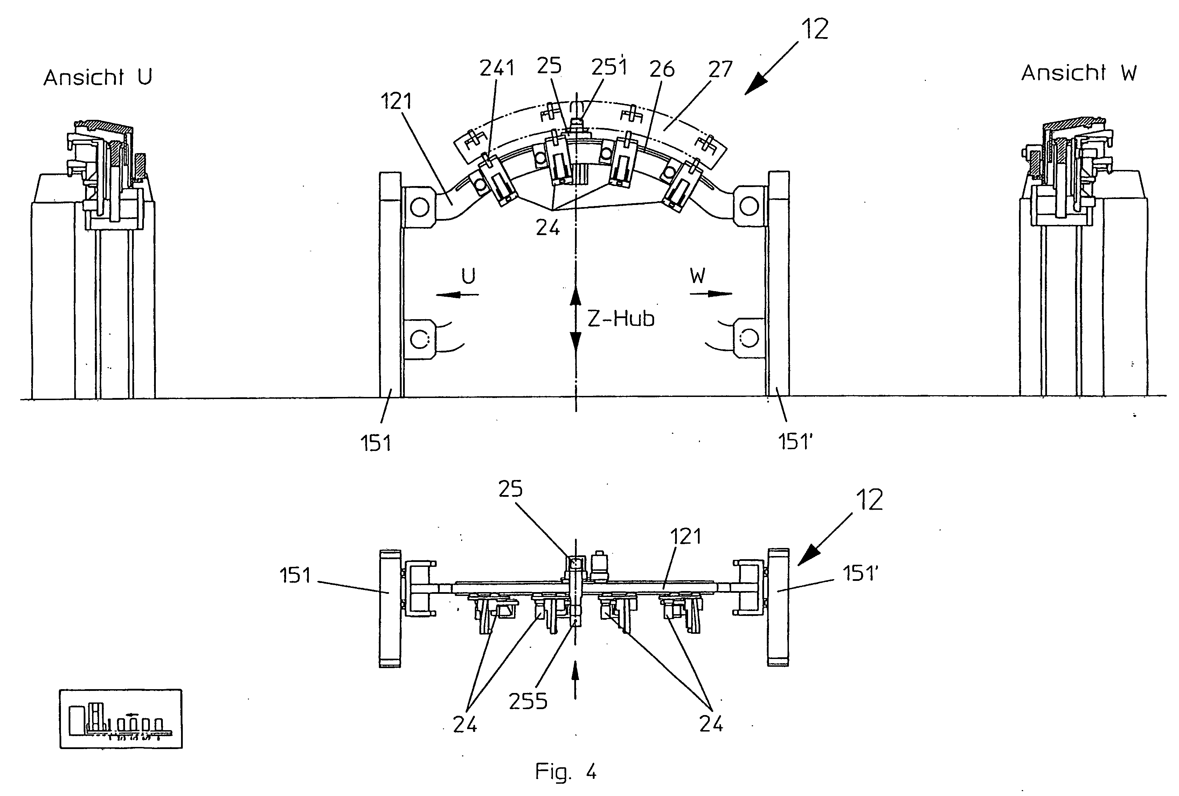

In der Fig. 1 ist eine erfindungsgemäße Halteeinrichtung 10 zum Halten von großformatigen Bauteilen gezeigt, vorzugsweise von gekrümmten Hautblechen, die zur Herstellung von Hautfeldern für Rumpfschalen eines Flugzeuges zur Anwendung kommen. Die zu fertigenden Hautfelder können Abmessungen bis ungefähr 11m x 3m aufweisen. An zylindrisch gekrümmten bzw. sphärisch gekrümmten Bauteilen sind längsverlaufende Stringer anzufügen. Die Halteeinrichtung 10 ist als flexibles Spannsystem ausgebildet, welches mehrere - in der gezeigten Ausführungsform acht - Spanneinheiten 1 bis 8 aufweist. Die Spanneinheiten 1 bis 8 sind auf einem Schienensystem 11 angeordnet und können entsprechend dem Anwendungsfall flexibel positioniert werden. Das Schienensystem 11 ist vorzugsweise am Boden einer Fertigungshalle befestigt und das Verlagern der Spanneinheiten 1 bis 8 auf den Schienen 11 ist in Hauptverfahrrichtung, d.h. in x-Richtung entsprechend des in die Figur eingezeichneten Koordinatensystems möglich. Die äußeren Spanneinheiten 1 und 8 sind als Spannbrücken 12 und 13 ausgebildet, wobei die Spannbrücke 12 die vordere und die Spannbrücke 13 die hintere Spannbrücke bilden. Die Spannbrücken 12 und 13 werden beidseitig von Tragsäulen 15 abgestützt. Die inneren Spanneinheiten 2 bis 7 bestehen jeweils aus einzelnen Spannarmen 14, die jeweils an einer Tragsäule 15 positioniert sind. Die wesentlichen Details der Spanneinheiten 1 bis 8 sind in den Figuren 4 bis 11 genauer dargestellt.

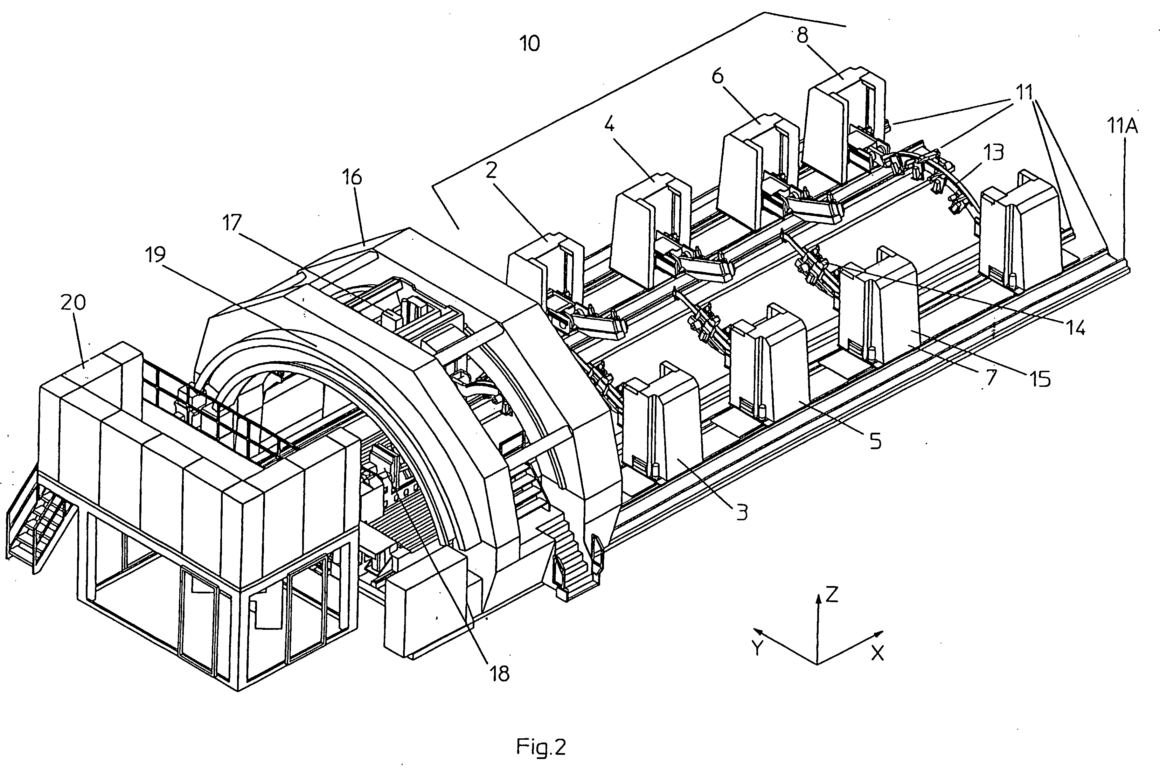

In der Fig. 2 ist eine Bearbeitungsmaschine 16 mit einem oberen Werkzeug 17 und einem unteren Werkzeug 18 ersichtlich. Sie ist in der gezeigten Ausführung mit der erfindungsgemäßen Halteeinrichtung 10 gekoppelt, um großflächige Bauteile vorzugsweise zylindrisch oder sphärisch gekrümmte Hautfelder einer Flugzeugrumpfschale zu bearbeiten. Die Bearbeitungsmaschine 16 ist in der gezeigten Ausführung als automatische Orbitalnietmaschine mit einem Arbeitsraum bis ungefähr 120° ausgebildet und kann auf einem Schienensystem 11A in Maschinenhauptrichtung verfahren werden, welches parallel zum Schienensystem 11 verläuft. Das obere Werkzeug 18 ist an einem halbkreisförmigen Bogen 19 angeordnet, deren Bogenenden in dem Schienensystem 11A gelagert sind. Der Bogen 19 weist Führungen auf, wobei das obere Werkzeug 17 für die Bearbeitungsvorgänge entlang dieser Führungen verfahrbar ist. Das untere Werkzeug 18 ist innerhalb des Bogens 19, vorzugsweise im Bereich des Kreismittelpunktes des Bogens 19, positioniert. Das obere und das untere Werkzeug 17 und 18 wirken für einen Nietvorgang an einer vorgegebenen Nietstelle zusammen. Eine Positionierung an der Nietstelle und eine Steuerung des Ablaufs eines Nietvorganges erfolgen über Programmsteuerungen, d.h. NC-Programme die damit eine weitgehend automatisierte Nietfertigung realisieren. Gleichzeitig ist eine Kopplung mit der Steuerung des Spannsystems möglich, um rechtzeitig Störkonturen zu erkennen und die entsprechenden Spannarme 14 aus dem Arbeitsbereich der Nietmaschine 16 herauszufahren. Der Steuerungscomputer ist in einer Rechenstation 20 angeordnet, von der aus auch Überwachungs- und Steuerungstätigkeiten eines Werkers über ein Bedienpult manuell vorgenommen werden können.
Die Spanneinheiten 1 bis 8 sind derartig ausgeführt, dass eine vorbestimmte Anzahl dieser Einheiten aus dem Arbeitsbereich der Maschine 16 herausgefahren werden kann, um der Maschine 16 für die Verrichtung ihres Arbeitszyklus im Bereich einer Halterung, d. h. im Bereich des Spannarmes 14 Platz zu machen, während eine größtmögliche Anzahl von Spanneinheiten gleichzeitig das Werkstück weiterhin unterstützt.
Die Bearbeitungsmaschine 16 kann mit dem oberen Werkzeug 17 die Spanneinheiten 1 bis 8 überfahren, das untere Werkzeug 18 kann seitlich an den Tragsäulen 15 der Spanneinheiten 1 bis 8 vorbeifahren. Die Spanneinheiten 1 bis 8 des Spannsystems sind so angeordnet sind, dass sich zwei parallel zur Hauptverfahrrichtung der Maschine verlaufende Reihen von Arbeitszonen/Halterungszonen ergeben.

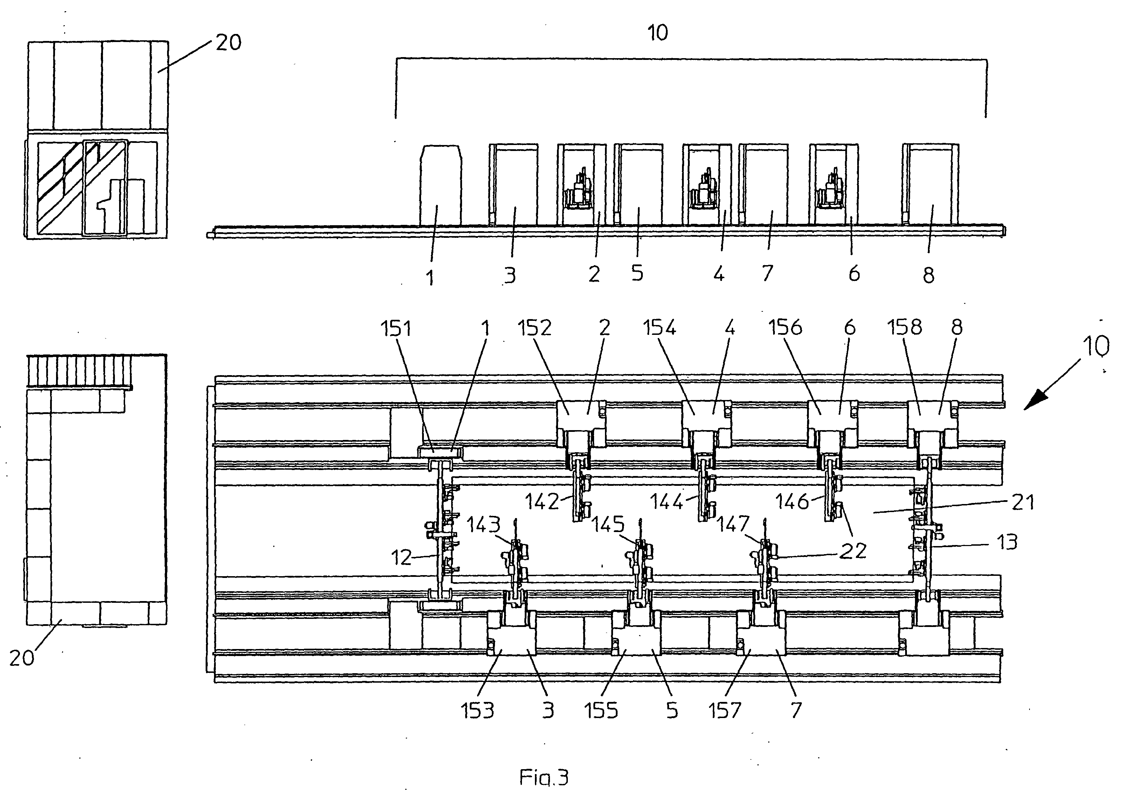

In der Fig. 3 ist die Halteeinrichtung 10 mit den Spanneinheiten 1 bis 8 in einer Ansicht von vorn und von oben dargestellt. Die Anordnung der Spanneinheiten 1 bis 8 zueinander sowie die Lage eines Bauteils 21 in gespannter Position ist gut erkennbar. Die Spannbrücke 12 ist in Relation zum Schienensystem 11 bzw. 11A fest fixiert und bildet einen Referenzpunkt zum Abgleich der Koordinaten mit der Bearbeitungsmaschine 16. Die Spannbrücken 12 und 13 fixieren und klemmen das Bauteil 21 stirnseitig. Die Spannarme 14 fixieren das Bauteil 21 über Halterungen 22, in dem gezeigten Ausführungsbeispiel mittels Saugkraft.

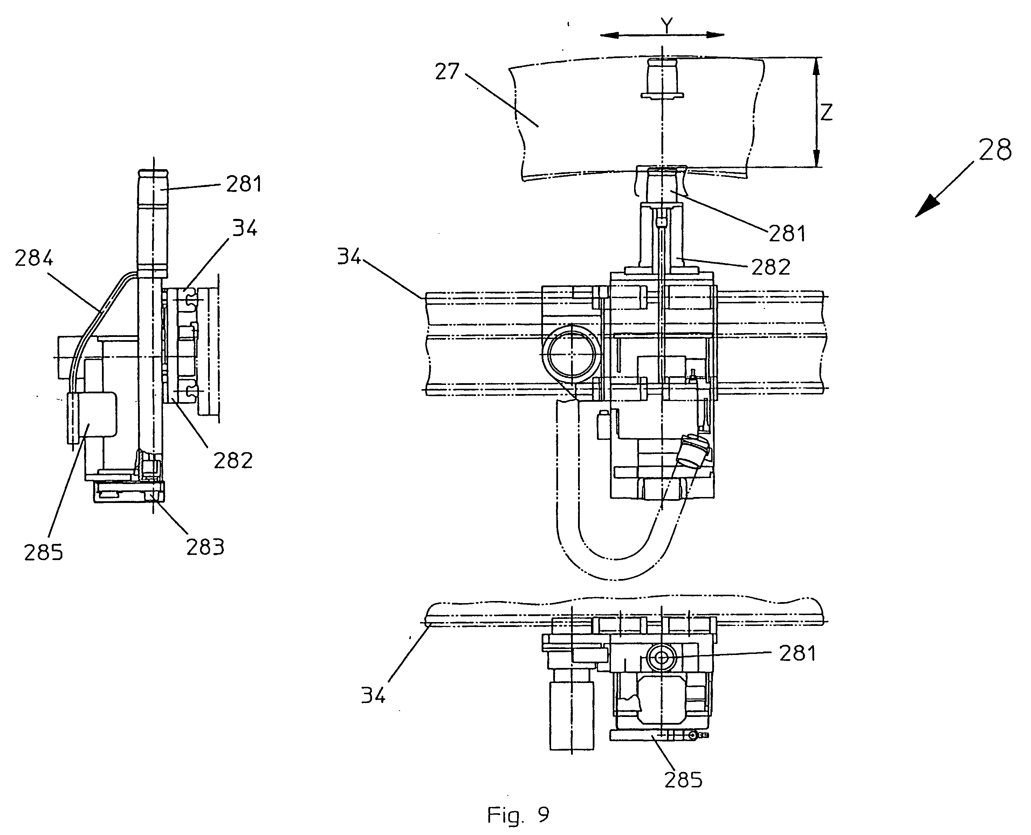

Aus den Figuren 1 bis 3 ist erkennbar, dass die Spanneinheiten 1 bis 8 des Haltesystems 10 so angeordnet sind, dass der gesamte Raum und insbesondere der Hallenboden unterhalb der Spanneinheiten 1 bis 8 beim Bearbeitungsvorgang frei zugänglich ist und dass in der Mitte zwischen den beiden Halterungsreihen ein für einen Werker möglichst aufrecht begehbarer Raum vorhanden ist.
In jeder Halterungszone des Haltesystems befindet sich eine Spanneinheit mit einem Spannarm 14 (ausgenommen am vorderen und hinteren Ende eines Bauteils, da hier Spannbrücken 12 und 13 vorgesehen sind), wobei je Spannarm 14 eine oder mehrere Einzelhalterungen 22 (siehe beispielsweise Saugeinheit 28 in Fig. 9) angeordnet sind. Jeder Spannarm 14 ist an einer parallel zur Maschinenhauptrichtung verfahrbaren Säule 15 angeordnet.
Der Arm 14 jeder Werkstückhalterung kann in jeder Arbeitszone unabhängig von anderen Spannarmen 14 aus der Unterstützung des Bauteiles 21 herausgelöst und in die Tragsäule 15 eingefahren werden kann, so dass der Arm 14 nicht mehr in den Arbeitsbereich der Maschine 16 hineinragt. Die Einzelhalterungen 22 auf jedem Spannarm 14 sind längs des Arms verfahrbar und weisen in der Höhe verfahrbare Werkstücktragelemente 23 (siehe Saugkopf 281 in Fig. 9) auf. Die zwischen den Endsäulen, d.h. den Tragsäulen 151 und 158 der äußeren Spanneinheiten 1 und 8 angebrachten mittleren Tragsäulen 152 bis 157 können über das Schienensystem 11 an der Säule 151 vorbei aus dem Arbeitsbereich der Maschine herausgefahren werden. Somit kann die Anzahl der benutzten Spanneinheiten 2 bis 7 variabel gestaltet werden und ist abhängig von der Größe des zu tragenden Bauteils 21, deren Steifigkeit und Form und den auf das Bauteil 21 wirkenden Bearbeitungskräften. Mit derartig flexiblen Spanneinheiten 1 bis 8 kann unaufwendig eine Umrüstung auf unterschiedliche Bauteilgrößen und ein Verzicht auf typ- und damit geometriebestimmte Vorrichtungen erfolgen.

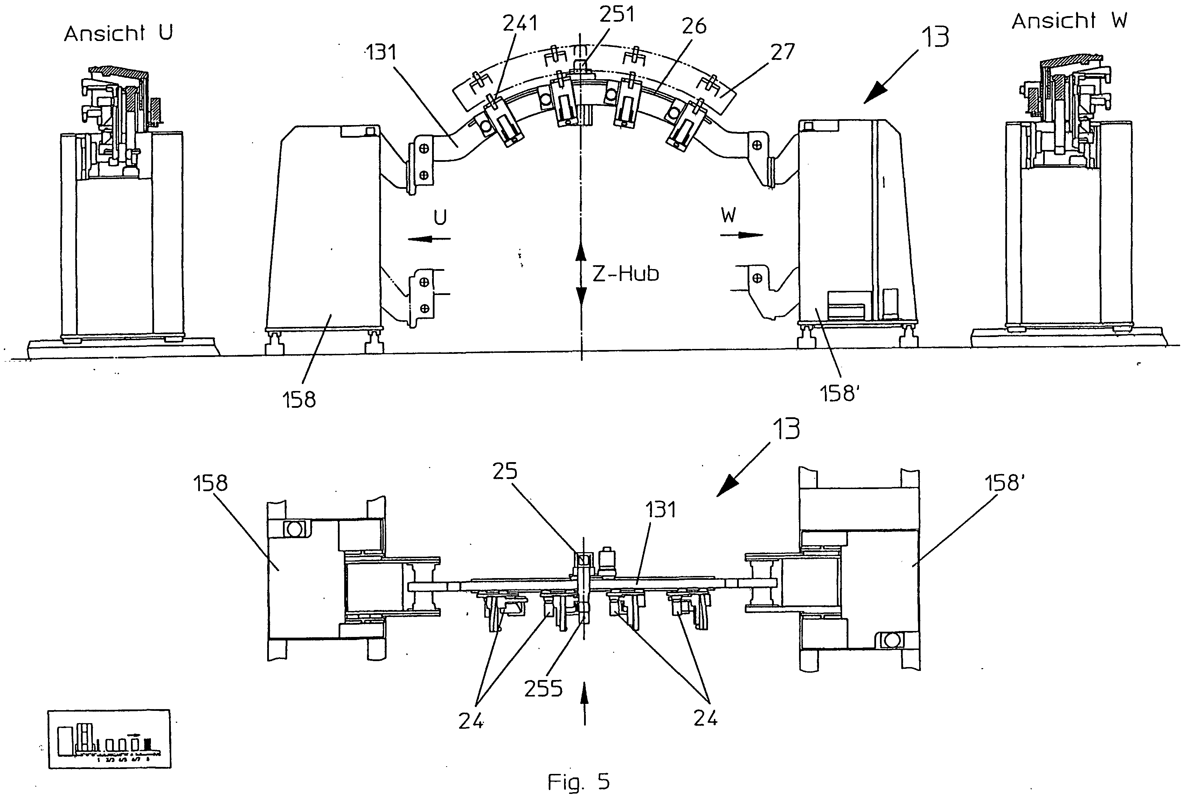

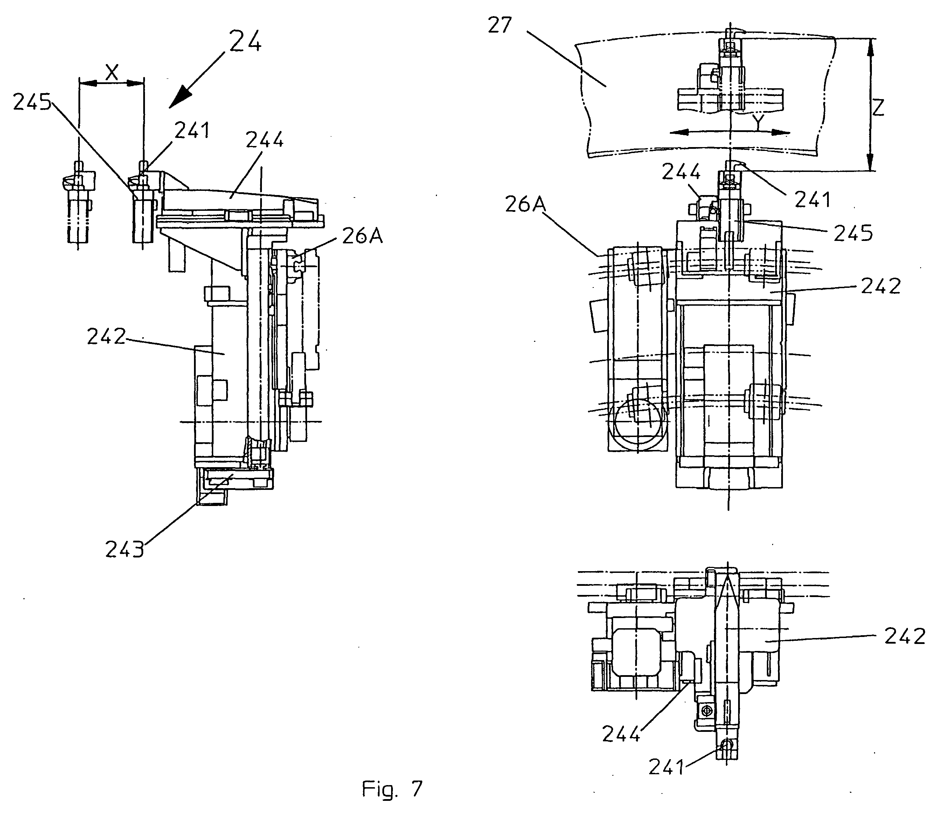

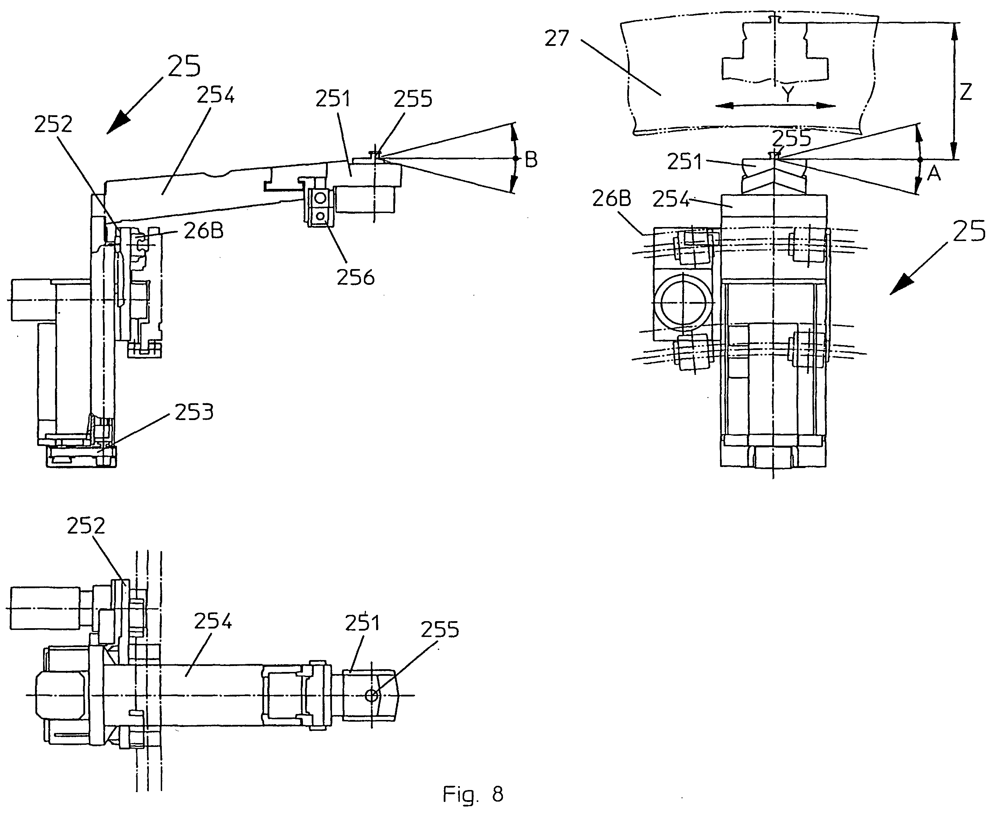

In den Figuren 4 und 5 sind die Spannbrücken 12 und 13 jeweils als Detaildarstellung ersichtlich. Es sind jeweils alle vier Ansichten gezeigt. Fig. 4 zeigt die Spannbrücke 12, die zwischen den Tragsäulen 151 und 151' einen sich beidseitig abstützenden Stützbogen 121 aufweist. Die Spannbrücke 12 ist am Hallenboden fixierbar, um damit einen Referenzpunkt für die Bauteilkoordinaten und die Werkzeugkoordinaten zu erhalten. Das Festlegen erfolgt über das Fixieren der Tragsäulen 151 und 151'. Der Stützbogen 121 ist entlang der Säulen 151 und 151' verschiebbar, d.h. in z - Richtung kann beispielsweise ein Hoch- und Herunterfahren des Stützbogens 121 erfolgen, um Beladevorgänge zu vereinfachen oder eine andere Arbeitshöhe der Maschine zu ermöglichen. Um den Zugang des unteren Werkzeugs 18 während des Bearbeitungsvorganges zu ermöglichen, ist die gezeigte obere Position des Stützbogens 121 einzunehmen (Bearbeitungsposition). Die angedeutete gestrichelte Position zeigt die Beladeposition an. Am Stützbogen 121 sind mehrere Klemmeinheiten 24 sowie eine Fixiereinheit 25 angeordnet. Die Fixiereinheit 25 ist vorgesehen, um beim Auflegen des Bauteils 21 auf die Halteeinrichtung 10 an einem Fixpunkt des größflächigen Bauteils 21 eine erste Positionierung und Ausrichtung in x - y Richtung zu erreichen. In eine Aufnahmebohrung (nicht gezeigt) des Bauteils 21 wird zu diesem Zweck ein Abstecker 255 positioniert. Mittels der Klemmeinheiten 24 wird das Bauteil 21 stirnseitig geklemmt. Die Klemmeinheiten 24 sind entlang einer Führungsbahn 26 am Stützbogen 121 positionierbar. Eine Verstellung des jeweiligen Klemm- bzw. Fixierkopfes 241 bzw. 251 ist vorgesehen, um im angegebenen Bauteilspannbereich 27 jeden möglichen Koordinatenpunkt zu erreichen.
Die Details der Einzelkomponenten Klemmeinheit 24 und Fixiereinheit 25 sind in den Fign. 7 und 8 gezeigt.

Die Fig. 5 zeigt die Spannbrücke 13, die zwischen den Tragsäulen 158 und 158' einen sich beidseitig abstützenden Stützbogen 131 aufweist. Der Stützbogen 131 kann in z - Richtung verfahren werden, um Beladevorgänge zu vereinfachen (gestrichelt dargestellte Beladeposition) oder eine Arbeitshöhe der Maschine zu ermöglichen, die ein Durchfahren des unteren Werkzeuges 18 ermöglicht (Bearbeitungsposition). Diese Bewegung kann allein oder synchron mit den weiteren Spannarmen 14 bzw. der Spannbrücke 12 erfolgen, wobei vorzugsweise ein computerunterstützter Ablauf zur Bewegung der Spanneinheiten sowie der Spannarme 14 und der Spannbrücken 12 und 13 zu erfolgen hat. Am Stützbogen 131 sind mehrere Klemmeinheiten 24 sowie eine Fixiereinheit 25 angeordnet, deren Funktionsweise entspricht den Klemmeinheit 24 und der Fixiereinheit 25 am Stützbogen 121. Nähere Details sind in den Fign. 7 und 8 dargestellt.

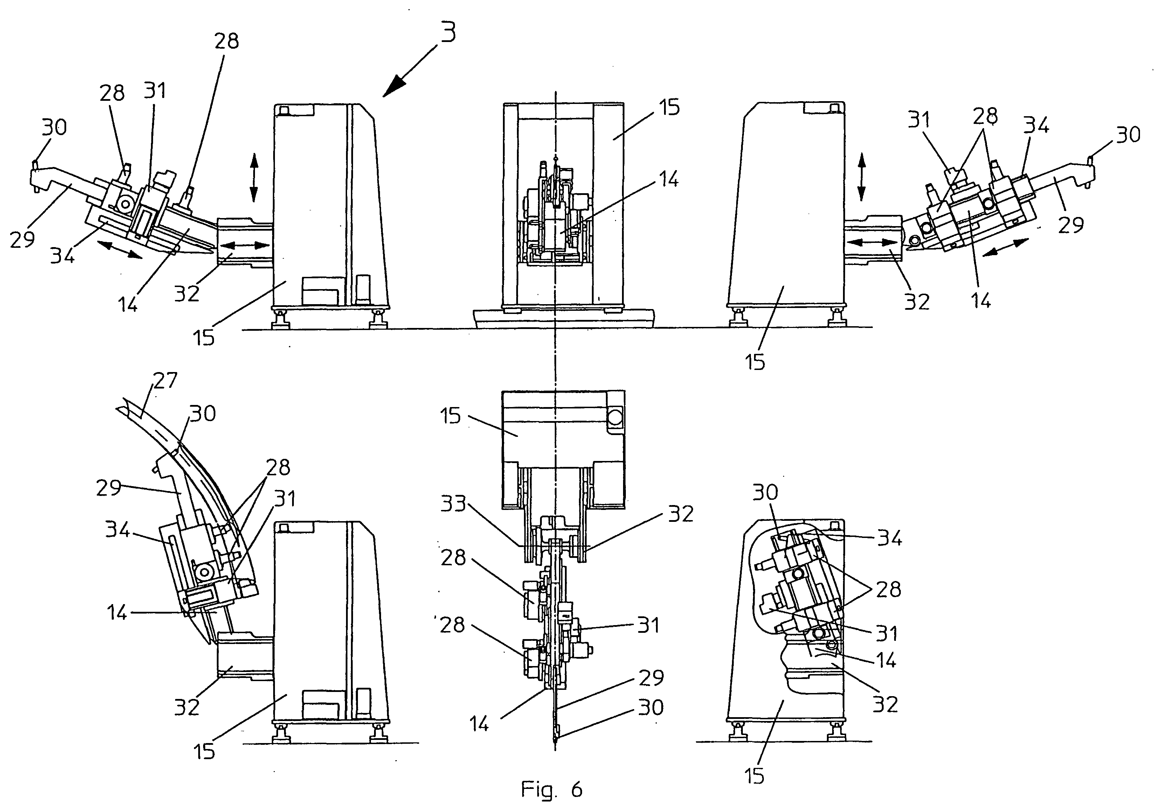

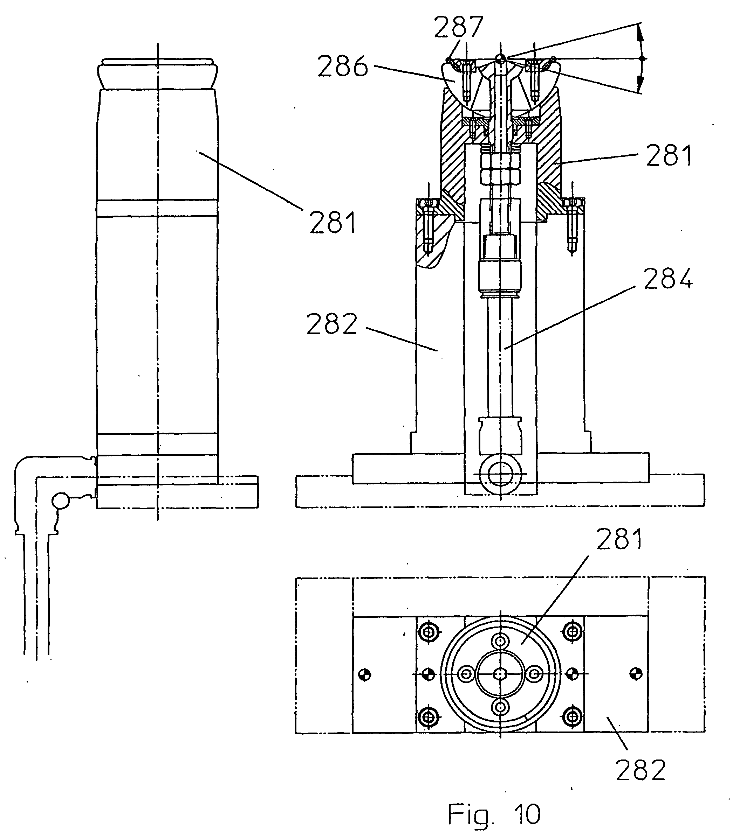

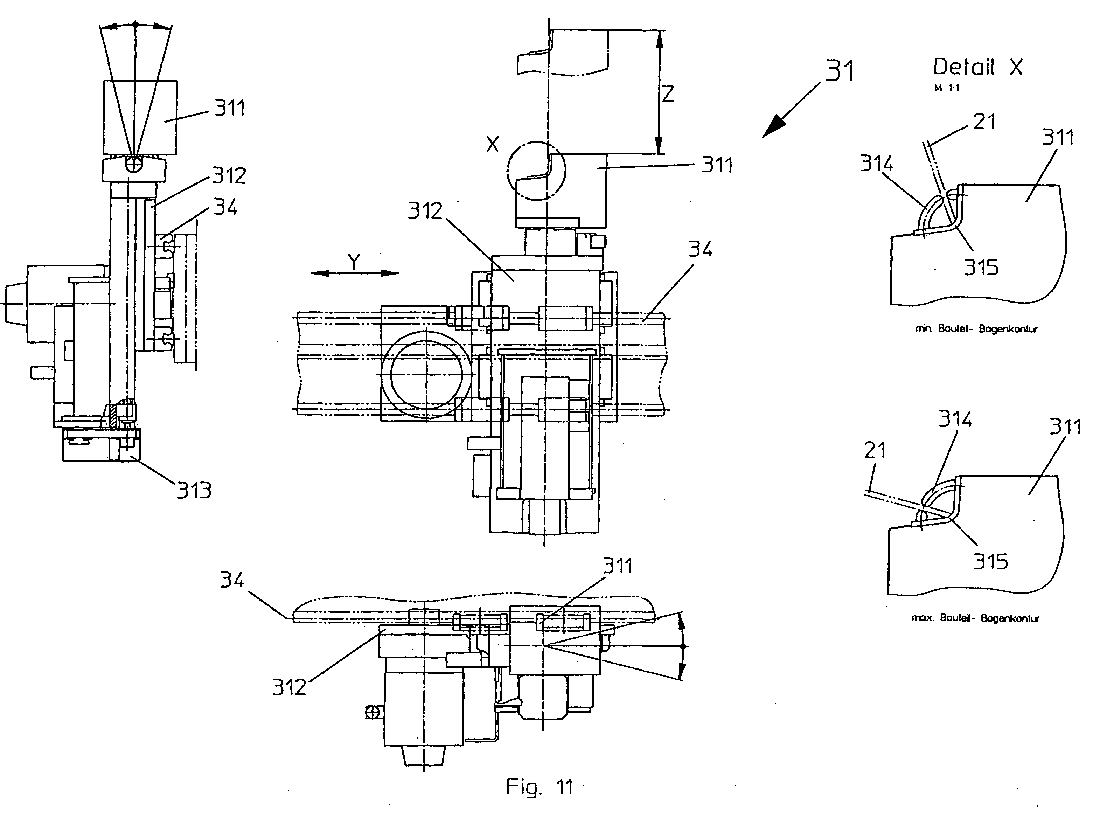

In Fig. 6 ist eine innere Spanneinheit 2, 3, 4, 5, 6 oder 7 (im folgenden 3) ersichtlich, die jeweils einen Spannarm 14 sowie eine Säule 15 aufweist. Die Spanneinheit 3 ist in einer Ansicht von oben, einer Ansicht von vorn und in Seitenansichten dargestellt. Neben der Arbeitsposition ist in je einer Seitenansicht die Beladeposition - linke Darstellung in Figur 6 - (mit hochgeschwenktem Spannarm 14) und die Parkposition - rechte Darstellung in Fig. 6 - gezeigt. In den Seitenansichten ist ersichtlich, dass der Spannarm 14 in z-Richtung entlang der Säule 15 verfahren werden kann. Wie schon bei den Spannbrücken 12 und 13 erläutert, können alle Halterungsarme 14 bzw. die Spannbrücken 12 und 13 allein oder synchron miteinander in der Höhe herauf- oder heruntergefahren werden, um eine ergonomische Beladehöhe zu ergeben bzw. andererseits eine für die Maschine optimale Arbeitshöhe zu ermöglichen. Die Anbindung des Spannarmes 14 an der Säule 15 erfolgt über ein Tragelement 32, welches eine weitere Bewegung des Spannarmes 14 in y-Richtung sowie eine Schwenkbewegung um eine Schwenkachse 33 ermöglicht. Mit diesen Bewegungsmöglichkeiten kann der Schwenkarm 14 völlig eingeklappt werden, beispielsweise bei Nichtgebrauch (in Parkposition), oder durch Hochschwenken um die Schwenkachse 33 eine nahezu aufrechte Position (Beladeposition) zur Aufnahme eines Bauteils einnehmen. Zum Beladen werden die Spannarme 14 einer Halterungsreihe (Halterungszone) des Spannsystems (Spannarme 143, 145, 147- siehe Fig. 3) durch Drehung um die Schwenkachsen 33 synchron aufrecht gestellt und ein Beladen mit einem vertikal zugeführten Bauteil ist ermöglicht. Da in der gezeigten Ausführung eine Aufnahme des Bauteils regelmäßig von einer Seite erfolgt, werden die Spannarme 143, 145 und 147 einer Halterungsreihe mit jeweils Armverlängerungen versehen, die teleskopisch ausgefahren werden können, um das Bauteil auf größerer Breite über seine Mitte hinaus zu unterstützen. Weiterhin sind an den Spannarmen 143, 145 und 147 neben dem Teleskoparm 29 jeweils Beladeaufnahmen 30 und 31 vorgesehen. Der Teleskoparm 29 ist entsprechend der Bauteilgröße aus dem Kopf des Spannarmes 14 herausfahrbar und im Kopfbereich des Teleskoparmes 29 ist die innere Beladeaufnahme 30 zum Abstützen des Bauteils 21 vorgesehen. Die innere Beladeaufnahme 30 ist als Auflagepunkt (Bauteilauflage) ausgebildet. An der äußeren Beladeaufnahme 31 wird die untere Außenkante des Bauteils 21 fixiert. Nähere Einzelheiten zur äußeren Beladeaufnahme 31 werden in der Fig. 11 dargelegt. Die äußere Beladeaufnahme 31 ist am Spannarm 14 in einer Zahnstangenführung 34 angeordnet und kann entsprechend der Größe des aufzunehmenden Bauteils 21 flexibel positioniert werden. Die Beladeaufnahmen 30 und 31 können manuell, motorisch oder durch NC-Bauteilprogrammierung entsprechend der Bauteilgröße, Bauteilgeometrie und gewünschter Bauteillage auf dem Halterungssystem voreingestellt werden.
Mittels der Spannarme 143, 145 und 147 und deren teleskopischen Armverlängerungen kann das vertikal zugeführte Bauteil allein durch die Halteeinrichtung 10 ohne das zu führende Bauteiltransportmittel gehalten werden. Durch Drehung um die Schwenkachse 33 der Halterungsarme 14 kann das Bauteil von der vertikalen Beladeposition in die horizontale Bearbeitungsposition geschwenkt werden. In dieser Position erfolgt eine Stützung des Bauteils mittels der Einzelhalterungen, die in der gezeigten Ausführung als Saugeinheiten 28 ausgebildet sind. Details zu den Saugeinheiten 28 sind den Fign. 9 und 10 zu entnehmen. Die Ausführung der Spannarme 143, 145 und 147 mit Teleskoparmen 29 sowie mit Beladeaufnahmen 30 und 31 in nur einer Halterungsreihe der Halteeinrichtung 10 ist bauteilbedingt. In weiteren Ausführungsformen der Erfindung ist es möglich, jeden Spannarm 14 mit teleskopischen Verlängerungen und/oder Beladeaufnahmen vorzusehen. Dann kann beispielsweise bei einem schmaleren als der halben Arbeitsbreite der Maschine entsprechenden Bauteil dieses auf einer Längshälfte der Halterungseinrichtung 10 geladen werden, während die andere Hälfte der Halterungseinrichtung 10 ein anderes entsprechend schmales Bauteil aufnehmen kann.

Die wichtigen Komponenten der Spanneinheiten 1 bis 8, wie Klemmeinheiten, Fixiereinheiten, Saugeinheiten und Beladeaufnahmen sind als Einzelheiten in den Figuren 7 bis 11 gezeigt.
In Fig. 7 ist die Klemmeinheit 24 in drei Ansichten ersichtlich, die an einer Bogenführung 26A der Spannbrücke 12 bzw. 13 (siehe Fign. 4 oder 5) über einen Zahnstangenantrieb positionierbar ist. Der Klemmkopf 241 der Klemmeinheit 24 ist an einem Grundkörper 242 angeordnet, der Träger für die notwendigen Komponenten zum Antrieb sowie der notwendigen Steuerleitungen ist. So ist ein als Spindelantrieb ausgebildeter Stellantrieb 243 vorgesehen, der eine Verstellung des Kopfes in z-Richtung ermöglicht. Eine weitere Stellbewegung des Klemmkopfes 241 in x-Richtung ist mit einem Stellantrieb 244 erreicht. Ein Pneumatikzylinder 245 ist vorgesehen, um den Klemmkopf 241 zu schwenken und einen Hub zur Erzeugung der Klemmkraft auszuführen.

In Fig. 8 ist die Fixiereinheit 25 in drei Ansichten dargestellt. Die Positionierung der Fixiereinheit 25 an der Spannbrücke 12 bzw. 13 erfolgt über die Bogenführung 26B, die vorzugsweise als Zahnstangenführung ausgebildet ist. Die Fixiereinheit 25 weist einen Grundkörper 252 auf, an dem über einen Auslegearm 254 der Fixierkopf 251 angeordnet ist. Am Fixierkopf 251 ist ein Abstecker 255 vorgesehen, der in eine Aufnahmebohrung des Bauteils 21 eingeführt werden kann und somit das Bauteil fixiert. Um einen Bauteilspannbereich 27 zu erreichen, ist neben der Stellbewegung in y-Richtung eine Stellbewegung in z-Richtung mittels einem Stellantrieb 253 vorgesehen. Der Fixierkopf 251 selbst ist in zwei Richtungen über NC-Achsen schwenkbar, um sich optimal der Bauteilkontur anpassen zu können.

In den Fign. 9 und 10 ist die Saugeinheit 28 ersichtlich, die die bevorzugte Einzelhalterung 22 bildet. Die Saugeinheit 28 besteht aus einem Grundkörper 282, an dem als Werkstücktragelement 23 ein Saugkopf 281 adaptiert ist. Über einen Zahnstangenantrieb 34 ist die Saugeinheit 28 entlang des Spannarms 14 bewegbar und positionierbar (siehe auch Fig. 6). Eine Stellbewegung in z-Richtung erfolgt mittels eines Stellantriebs 283. Über eine Luftleitung 284 kann dem Saugkopf 281 Druckluft zugeführt werden, um "schwimmend" das Bauteil auf der Halteeinrichtung 10 positionieren zu können. Für die Spannfunktion wird mittels eines Ejektors 285 Unterdruck erzeugt, der am Saugkopf 281 die zum Halten des Bauteils notwendige Saugkraft zur Verfügung stellt. In Fig. 10 ist in einer vergrößerten Darstellung der Saugkopf 281 ersichtlich, der mittels eines Adapters mit dem Grundkörper 282 verbunden ist. Zur optimalen Anpassung an die zylindrische oder sphärische Krümmung des Bauteils 21 weist der Saugkopf 281 eine Kugelkalotte 286 sowie Dichtlippen 287 zum Erreichen einer luftdichten Abdichtung zwischen Saugkopf 281 und Bauteil auf.
In einer weiteren Ausgestaltung der Erfindung kann alternativ zur Saugeinheit 28 eine Aufnahmeeinheit vorgesehen werden, die statt eines Saugkopfes 281 Werkstückauflagepunkte oder andere Halteelemente nach bekannter Art aufweist.

In Fig. 11 ist die äußere Beladeaufnahme 31 in Einzelheiten gezeigt. An einem Grundkörper 312 ist der Beladekopf 311 angeordnet. Der Beladekopf 311 kann über einen Stellantrieb 313 in der Höhe verstellt werden und ist kardanisch gelagert: Die Beladeaufnahme 31 ist in einer Zahnstangenführung 34 entlang des Spannarms 14 positionierbar. Die Positionierung erfolgt in Abhängigkeit von der Bauteilgröße. Am Beladekopf 311 sind Klemmbacken 314 vorgesehen, die das Bauteil 21 nach der Positionierung an einer Auflagekante 315 festhalten.

Ein Belade- und Positioniervorgang eines großflächigen Bauteils auf die erfindungsgemäße flexible Halteeinrichtung 10 kann folgendermaßen ablaufen: Das großflächige Bauteil wird in vertikaler Ausrichtung mittels eines Hängekrans der Halteeinrichtung 10 zugeführt. Zum Beladevorgang sind die mit Beladeaufnahmen 30 und 31 versehenen Spannarme 143, 145, 147 einer Halterungszone hochgeschwenkt. An den äußeren Beladeaufnahmen 31 wird an einer Auflagekante 315 die Außenkante des Bauteils 21 aufgesetzt. Die am verlängerten Spannarm (Teleskoparm) 29 angeordnete innere Beladeaufnahme 30 stützt das Bauteil in einem Bereich über die Bauteilmitte hinaus ab. Zu diesem Zeitpunkt kann die Krananlage das Bauteil absetzen und lösen. Die Halterung des Bauteils erfolgt nunmehr vollständig von der Halterungsreihe der Spanneinheiten 143, 145, 147. Aus der Beladeposition erfolgt ein Herunterschwenken der Spannarme 143, 145 und 147 in die Spannposition, wobei die gegenüberliegenden Spannarme 142, 144 und 146 der anderen Halterungszone bereits in dieser Position positioniert sind und nach Erreichen der Endposition des Schwenkarmes ein Abstützen des Bauteils 21 über die gesamte Bauteilfläche erfolgt. Mittels der Saugeinheiten 28 wird das Bauteil "schwimmend" gehalten und zur Positionierung an der Spannbrücke 12 sowie an der Spannbrücke 13 werden in Aufnahmebohrungen des Bauteils Abstecker 255 der jeweiligen Fixiereinheit 25 gesteckt. Nach dem Fixieren der Abstecker 255 wird das Bauteil stirnseitig geklemmt und mittels der Saugeinheiten 28 gespannt. Um eine Zugänglichkeit des unteren Werkzeugs 18 zu den Bearbeitungsstellen zu ermöglichen, werden die Spannbrücken 12 und 13 sowie die Spannarme 14 synchron in Arbeitsposition (in z-Richtung) verfahren. Der eigentliche Bearbeitungsvorgang, d.h. das Nieten von Bauteilen, ist bereits in der Figurenbeschreibung zur Fig. 2 erläutert. Eine vorbestimmte Anzahl der Spanneinheiten 2 bis 7 können dafür ihre Spannarme 14 aus dem Arbeitsbereich der Maschine 16 herausfahren, um der Maschine 16 für die Verrichtung ihres Arbeitszyklus im Bereich einer Halterung, d. h. im Bereich des Spannarmes 14 Platz zu machen, während eine größtmögliche Anzahl von Spanneinheiten gleichzeitig das Werkstück weiterhin unterstützt. Alle Bewegungen der Spanneinheiten sowie deren Komponenten werden durch NC-Steuerungen koordiniert und ermöglichen zum einen eine synchrone Bewegung der einzelnen Spannmittel sowie auch eine Bewegung eines einzelnen Spannmittels weitgehend automatisiert.

### Bezugszeichenliste

- 1-8: - Spanneinheiten
- 10: - Halteeinrichtung
- 11: - Schienensystem für Halteeinrichtung
- 11A: - Schienensystem für Nietmaschine
- 12: - vordere Spannbrücke
- 121: - Stützbogen an 12
- 13: - hintere Spannbrücke
- 131: - Stützbogen an 13
- 14: - Spannarm
- 142 - 147: - Spannarme an inneren Einheiten 2 bis 7
- 15: - Säule (Tragsäule)
- 151-158: - Säule je Spanneinheit
- 16: - Bearbeitungsmaschine (Orbitalnietmaschine)
- 17: - oberes Werkzeug
- 18: - unteres Werkzeug
- 19: - halbkreisförmiger Bogen für oberes Werkzeug
- 20: - Rechenstation (Steuerstation)
- 21: - Bauteil
- 22: - Einzelhalterungen
- 23: - Werkstücktragelement
- 24: - Klemmeinheit
- 241: - Klemmkopf
- 242: - Grundkörper
- 243: - Spindelantrieb (für z-Richtung)
- 244: - Stellantrieb für x-Richtung (max. 150mm)
- 245: - Pneumatikzylinder
- 25: - Fixiereinheit
- 251: - Fixierkopf
- 252: - Grundkörper
- 253: - Spindelantrieb für z-Richtung
- 254: - Auslegearm
- 255: - Abstecker
- 256: - Stellantrieb für Schwenkbewegung
- 26: - Führungsbahn (Bogenführung)
- 26A: - ... für Klemmeinheit
- 26B: - ... für Fixiereinheit (in y-Richtung)
- 27: - Bauteilspannbereich
- 28: - Saugeinheit
- 281: - Saugkopf
- 282: - Grundkörper
- 283: - Stellantrieb in z-Richtung
- 284: - Luftleitung
- 285: - Ejektor
- 286: - Kugelkalotte
- 287: - Dichtlippen
- 29: - Teleskoparm
- 30: - Beladeaufnahme (innen)
- 31: - Beladeaufnahme (außen)
- 311: - Beladekopf
- 312: - Grundkörper
- 313: - Spindelantrieb für z-Richtung
- 314: - Klemmbacken
- 315: - Auflagekante
- 32: - Tragelement
- 33: - Schwenkachse in Beladeposition
- 34: - Zahnstangenantrieb

## Patentansprüche

1. Halteeinrichtung zum Halten von großformatigen Bauteilen, wobei die Halteeinrichtung (10) mehrere Spanneinheiten (1 bis 8) aufweist, die auf einem Schienensystem (11) verfahrbar sind, **dadurch gekennzeichnet, dass** die Anordnung der Spanneinheiten (2 bis 7) so ausgeführt ist, dass ein Teil der Spanneinheiten (2, 4, 6) entlang einer Bauteilseite angeordnet und entsprechend der andere Teil der Spanneinheiten (3, 5, 7) entlang der anderen Bauteilseite vorgesehen ist und die Spanneinheiten (2 bis 7) verfahrbare und schwenkbare Spannarme (14) aufweisen, wobei eine Minimalzahl von Spannarmen (14) aus dem Arbeitsbereich einer Bearbeitungsmaschine (16) herausfahrbar ist, um einer Maschine (16) für die Verrichtung ihres Arbeitszyklusses im Bereich einer Spanneinheit (1 - 8) Platz zu machen, während eine größtmögliche Anzahl von Spanneinheiten (1 - 8) gleichzeitig das Bauteil (21) weiterhin unterstützt.

2. Halteeinrichtung nach Anspruch 1, **dadurch gekennzeichnet, dass** die Spanneinheiten (2 - 7) so angeordnet sind, dass sich zwei parallel zur Hauptverfahrrichtung der Maschine (16) verlaufende Reihen von Halterungszonen ergeben.

3. Halteeinrichtung nach einem der Ansprüche 1 oder 2, **dadurch gekennzeichnet, dass** die äußeren Spanneinheiten (1, 8) als Spannbrücken (12, 13) ausgebildet sind, wobei Stützbögen (121, 131) beidseitig in Tragsäulen (151, 151'; 158, 158') abgestützt sind.

4. Halteeinrichtung nach einem der Ansprüche 1 bis 3, **dadurch gekennzeichnet, dass** an mindestens einer Spannbrücke (12,13) Klemmeinheiten (24) vorgesehen sind zur stirnseitigen Halterung des Bauteils.

5. Halteeinrichtung nach einem der Ansprüche 1 bis 4, **dadurch gekennzeichnet, dass** an mindestens einer Spannbrücke (12,13) zumindest eine Fixiereinheit (25) vorgesehen sind zur Positionierung des Bauteils anhand einer vordefinierten Aufnahmebohrung.

6. Halteeinrichtung nach einem der Ansprüche 1 bis 5, **dadurch gekennzeichnet, dass** die Spanneinheiten (1 bis 8) zumindest eine Beladeposition und eine Bearbeitungsposition vorsehen, wobei für die Bearbeitungsposition die Spanneinheiten (1 bis 8) höhenverfahrbar sind, um einen Zugangsraum unterhalb der Spannarme (14) bzw. Spannbrücken (12, 13) zu bilden.

7. Halteeinrichtung nach einem der Ansprüche 1 bis 6, **dadurch gekennzeichnet, dass** der Spannarm (14) mindestens eine Einzelhalterung (22) aufweist.

8. Halteeinrichtung nach einem der Ansprüche 1 bis 7, **dadurch gekennzeichnet, dass** der Spannarm (14) an einer parallel zur Bearbeitungshauptrichtung verfahrbaren Tragsäule (15) angeordnet ist.

9. Halteeinrichtung nach einem der Ansprüche 1 bis 8, **dadurch gekennzeichnet, dass** der Spannarm (14) mindestens einer Spanneinheit (2 bis 7), der während des Bearbeitungsvorganges eine Störkontur für die Bearbeitungsmaschine bildet, unabhängig von den Spannarmen (14) der weiteren Spanneinheiten aus der Unterstützung des Bauteils (21) herauslösbar ist, so dass der Arm nicht in den Arbeitsbereich der Maschine (16) hineinragt.

10. Halteeinrichtung nach einem der Ansprüche 7 bis 9, **dadurch gekennzeichnet, dass** die Einzelhalterungen (22; 28) senkrecht zur Bearbeitungshauptrichtung (y-Richtung) längs des Spannarms (14) verfahrbar sind und in der Höhe verfahrbare Werkstück-Halterungselemente (23; 281) aufweisen.

11. Halteeinrichtung nach einem der Ansprüche 7 bis 10, **dadurch gekennzeichnet, dass** die Einzelhalterung (22) als Saugeinheit (28) ausgebildet ist, wobei mittels Druckluft eine "schwimmende" Positionierung des Bauteils und/oder mittels Unterdruck am Saugkopf (281) eine Bauteilhaltekraft erreicht ist.

12. Halteeinrichtung nach einem der Ansprüche 1 bis 11, **dadurch gekennzeichnet, dass** zumindest eine Spannbrücke (12) so innerhalb des Schienensystems (11) angeordnet ist, dass die inneren Spanneinheiten (2 bis 7) auf dem Schienensystem (11) an den Endsäulen (151, 151') vorbei aus dem Arbeitsbereich der Maschine (16) herausfahrbar sind und somit die Anzahl der benutzten Spanneinheiten variabel ist.

13. Halteeinrichtung nach einem der Ansprüche 1 bis 12, **dadurch gekennzeichnet, dass** die Spannarme (14) und Spannbrücken (12, 13) über Steuerleitungen verbunden und programmierbar sind, um einzeln oder synchron miteinander in der Höhe herauf- oder herunterzufahren.

14. Halteeinrichtung nach einem der Ansprüche 1 bis 13, **dadurch gekennzeichnet, dass** die Spannarme (14) zumindest je eine Schwenkachse (33) aufweisen für die Beladung mit einem vertikal zugeführten Bauteil.

15. Halteeinrichtung nach einem der Ansprüche 1 bis 14, **dadurch gekennzeichnet, dass** die Spannarme (14) zumindest einer Halterungsreihe (Spanneinheiten 143, 145, 147) nahe ihren Schwenkachsen (33) entsprechend Bauteilkontur und Bauteilgröße einstellbare Beladeaufnahmen (31) aufweisen zur Abstützung eines vertikal zugeführten Bauteils.

16. Halteeinrichtung nach einem der Ansprüche 1 bis 15, **dadurch gekennzeichnet, dass** zumindest ein Spannarm (14) als Armverlängerung einen Teleskoparm (29) aufweist.

17. Halteeinrichtung nach einem der Ansprüche 1 bis 16, **dadurch gekennzeichnet, dass** im Bereich des Spannarmkopfes (14) oder am Teleskoparm (29) eine Beladeaufnahme (30) vorgesehen ist.

18. Halteeinrichtung nach einem der Ansprüche 1 bis 17, **dadurch gekennzeichnet, dass** die Beladeaufnahmen (30, 31) manuell, motorisch oder durch NC-Bauteilprogramm entsprechend der Bauteilgröße, Bauteilgeometrie und gewünschter Bauteillage auf dem Halterungssystem voreingestellt werden können.

19. Halteeinrichtung nach einem der vorangegangenen Ansprüche, **dadurch gekennzeichnet, dass** bei einem schmaleren als der halben Arbeitsbreite der Maschine (16) entsprechenden Bauteil dieses auf einer Halterungsreihe (143, 145, 147) der Halteeinrichtung (10) angeordnet ist, während auf der weiteren Halterungsreihe (142, 144, 146) ein anderes entsprechend schmales Bauteil angeordnet ist.

20. Bearbeitungsmaschine (16) mit einem oberen und einem unteren Werkzeug (17, 18), vorzugsweise als Orbitalnietmaschine ausgebildet, welches mit einer Halteeinrichtung (10) nach einem der vorangegangenen Ansprüche gekoppelt ist, **dadurch gekennzeichnet, dass** die Maschine (16) mit dem oberen Werkzeug (17) die Spanneinheiten (1 bis 8) überfahren kann und mit dem unteren Werkzeug (18) seitlich an den Tragsäulen (15) der Spanneinheiten (1 bis 8) vorbeifährt.

21. Verfahren zum Bearbeiten von großformatigen Bauteilen, wobei eine Bearbeitung mit einem oberen und einem unteren Werkzeug durchgeführt wird und eine Halteeinrichtung nach einem der Ansprüche 1 bis 19 die großformatigen Bauteile halten, **dadurch gekennzeichnet, dass**
- in Arbeitsposition eine Minimalzahl von Spannarmen aus dem Arbeitsbereich der Werkzeuge (17, 18) herausgefahren werden, um der Maschine (16) für die Verrichtung ihres Arbeitszyklus im Bereich eines Spannarms (14) Platz zu machen,
- während eine größtmögliche Anzahl von Spannarmen (14) gleichzeitig das Bauteil (21) weiterhin unterstützen.

22. Verfahren zum Beladen der Halteeinrichtung nach einem der Ansprüche 1 bis 19 mit vertikal zugeführten Bauteilen mit folgenden Schritten:
- Spanneinheiten (1-8) werden in Beladeposition gebracht, wobei zumindest in einer Halterungsreihe (Spanneinheiten 143, 145, 147) die Spannarme (14) hochgeschwenkt werden,
- das Bauteil (21) wird auf der äußeren Beladeaufnahme (31) aufgesetzt,
- das Bauteil wird an der inneren Beladeaufnahme (30) angelegt,
- das Bauteil (21) wird von der Zuführeinrichtung gelöst und allein durch die Halteeinrichtung (10) getragen,
- die hochgeschwenkten Spannarme (14) werden abgesenkt bis eine Auflage des Bauteils durch die weitere Halterungsreihe (Spanneinheiten 142, 144, 146) erreicht ist,
- das Bauteil (21) wird fixiert und stirnseitig geklemmt und
- das Bauteil wird durch die Werkstückhalterungen (22; 28) abgestützt und gehalten.

## Claims

1. Holding apparatus for holding large-size components, wherein the said holding apparatus (10) has a number of clamping units (1 to 8) which are displaceable on a rail system (11), **characterised in that** the disposition of the clamping units (2 to 7) is so designed that some of the said clamping units (2, 4, 6) are disposed along one side of the component and, in a corresponding manner, the rest of the clamping units (3, 5, 7) are provided along the other side of the component, and the clamping units (2 to 7) have displaceable and swivellable clamping arms (14), it being possible to displace a minimal number of clamping arms (14) out of the working range of a processing machine (16) in order to make space for a machine (16) for the execution of its working cycle in the region of one clamping unit (1 - 8), while the largest possible number of clamping units (1 - 8) simultaneously continues to support the component (21).

2. Holding apparatus according to claim 1, **characterised in that** the clamping units (2 - 7) are so disposed that two rows of mounting zones are obtained, which rows extend parallel to the main direction of displacement of the machine (16).

3. Holding apparatus according to one of claims 1 or 2, **characterised in that** the outer clamping units (1, 8) are constructed as clamping bridges (12, 13), supporting arches (121, 131) being supported on either side in carrying columns (151, 151'; 158, 158').

4. Holding apparatus according to one of claims 1 to 3, **characterised in that** gripping units (24) are provided on at least one clamping bridge (12, 13) for mounting the component at the end face(s).

5. Holding apparatus according to one of claims 1 to 4, **characterised in that** at least one fixing unit (25) is provided on at least one clamping bridge (12, 13) for positioning the component with the aid of a predefined receiving bore.

6. Holding apparatus according to one of claims 1 to 5, **characterised in that** the clamping units (1 to 8) provide at least one loading position and one processing position, it being possible to displace the said clamping units (1 to 8) vertically for the processing position, in order to form an access space underneath the clamping arms (14) or clamping bridges (12, 13).

7. Holding apparatus according to one of claims 1 to 6, **characterised in that** the clamping arm (14) has at least one individual mounting arrangement (22).

8. Holding apparatus according to one of claims 1 to 7, **characterised in that** the clamping arm (14) is disposed on a carrying column (15) which is displaceable parallel to the main direction of processing.

9. Holding apparatus according to one of claims 1 to 8, **characterised in that** the clamping arm (14) of at least one clamping unit (2 to 7), which clamping arm constitutes an obstructing contour for the processing machine during the processing operation, can be detached, independently of the clamping arms (14) of the other clamping units, from the supporting system for the component (21), so that the said arm does not protrude into the working range of the machine (16).

10. Holding apparatus according to one of claims 7 to 9, **characterised in that** the individual mounting arrangements (22; 28) are displaceable along the clamping arm (14) perpendicularly to the main direction of processing (the y direction), and have vertically displaceable workpiece mounting elements (23; 281).

11. Holding apparatus according to one of claims 7 to 10, **characterised in that** the individual mounting arrangement (22) is constructed as a suction unit (28), "floating" positioning of the component being achieved by means of compressed air and/or a component holding force being achieved by means of negative pressure at the suction head (281).

12. Holding apparatus according to one of claims 1 to 11, **characterised in that** at least one clamping bridge (12) is so disposed within the rail system (11) that the inner clamping units (2 to 7) can be displaced on the said rail system (11), past the end columns (151, 151') and out of the working range of the machine (16), and thus the number of clamping units used is variable.

13. Holding apparatus according to one of claims 1 to 12, **characterised in that** the clamping arms (14) and clamping bridges (12, 13) are connected via control lines and programmable, in order to travel vertically up or down individually or synchronously with one another.

14. Holding apparatus according to one of claims 1 to 13, **characterised in that** the clamping arms (14) have at least one swivel pin (33) each for loading with a component which is conveyed in vertically.

15. Holding apparatus according to one of claims 1 to 14, **characterised in that** the clamping arms (14) of at least one row of mounting arrangements (clamping units 143, 145, 147) have, near their swivel pins (33), loading receptacles (31), which can be set according to the contour and size of the component, for supporting a component which is conveyed in vertically.

16. Holding apparatus according to one of claims 1 to 15, **characterised in that** at least one clamping arm (14) has a telescopic arm (29) as an extension of the said arm.

17. Holding apparatus according to one of claims 1 to 16, **characterised in that** a loading receptacle (30) is provided in the region of the clamping arm head (14) or on the telescopic arm (29).

18. Holding apparatus according to one of claims 1 to 17, **characterised in that** the loading receptacles (30, 31) can be preset manually, by motor or by a numerically controlled component programme, according to the size and geometry of the component and its desired location on the mounting system.

19. Holding apparatus according to one of the preceding claims, **characterised in that**, in the case of a suitable component which is narrower than half the working width of the machine (16), the said component is disposed on a row of mounting arrangements (143, 145, 147) of the holding apparatus (10), while another, suitably narrow component is disposed on the other row of mounting arrangements (142, 144, 146).

20. Processing machine (16) which has an upper and a lower tool (17, 18) and is preferably constructed as an orbital riveting machine and which is coupled to a holding apparatus (10) according to one of the preceding claims, **characterised in that** the machine (16) is capable of travelling over the clamping units (1 to 8) with the upper tool (17) and travels laterally past the carrying columns (15) of the clamping units (1 to 8) with the lower tool (18).

21. Method of processing large-size components, wherein processing is performed with an upper and a lower tool and a holding apparatus according to one of claims 1 to 19 holds the large-size components, **characterised in that**
- in the working position, a minimal number of clamping arms is displaced out of the working range of the tools (17, 18), in order to make space for the machine (16) for the execution of its working cycle in the region of a clamping arm (14),
- while the largest possible number of clamping arms (14) simultaneously continues to support the component (21).

22. Method of loading the holding apparatus according to one of claims 1 to 19 with components which are conveyed in vertically, the said method comprising the following steps:
- clamping units (1-8) are brought into the loading position, the clamping arms (14) being swivelled upwards, at least in one row of mounting arrangements (clamping units 143, 145, 147),
- the component (21) in placed on the outer loading receptacle (31),
- the component is laid against the inner loading receptacle (30),
- the component (21) is detached from the conveying-in apparatus and carried solely by the holding apparatus (10),
- the upwardly swivelled clamping arms (14) are lowered until supporting of the component by the other row of mounting arrangements (clamping units 142, 144, 146) is achieved,
- the component (21) is fixed and is gripped at the end face(s), and
- the component is supported and held by the workpiece mounting arrangements (22; 28).

## Revendications

1. Dispositif de maintien pour maintenir des pièces de grandes dimensions, dans lequel le dispositif de maintien (10) présente plusieurs unités de serrage (1 à 8), qui peuvent être déplacées sur un système de rails (11), **caractérisé en ce que** l'aménagement des unités de serrage (2 à 7) est réalisé de sorte qu'une partie des unités de serrage (2, 4, 6) soit agencée le long d'un côté de la pièce et que, de manière correspondante, l'autre partie des unités de serrage (3, 5, 7) soit ménagée le long de l'autre côté de la pièce, et les unités de serrage (2 à 7) présentent des bras de serrage mobiles et pivotants (14), un nombre minimal de bras de serrage (14) pouvant être déplacé hors de la zone de travail d'une machine de façonnage (16) pour faire place à une machine (16) pour l'exécution de son cycle de travail dans la zone d'une unité de serrage (1 à 8), tandis qu'un nombre le plus grand possible d'unités de serrage (1 à 8) soutient encore simultanément la pièce (21).

2. Dispositif de maintien selon la revendication 1, **caractérisé en ce que** les unités de serrage (2 à 7) sont agencées de sorte que soient formées deux séries de zones de maintien s'étendant parallèlement à la direction de déplacement principale de la machine (16).

3. Dispositif de maintien selon l'une quelconque des revendications 1 ou 2, **caractérisé en ce que** les unités de serrage externes (1, 8) se présentent sous la forme de ponts de serrage (12, 13), dans lesquels des arcs-boutants (121, 131) sont soutenus des deux côtés par des potences (151, 151'; 158, 158').

4. Dispositif de maintien selon l'une quelconque des revendications 1 à 3, **caractérisé en ce qu'**il est prévu, sur au moins un pont de serrage (12, 13), des unités de blocage (24) pour maintenir frontalement la pièce.

5. Dispositif de maintien selon l'une quelconque des revendications 1 à 4, **caractérisé en ce qu'**il est prévu, sur au moins un pont de serrage (12, 13), au moins une unité de fixation (25) pour positionner la pièce au moyen d'un orifice récepteur prédéfini.

6. Dispositif de maintien selon l'une quelconque des revendications 1 à 5, **caractérisé en ce que** les unités de serrage (1 à 8) prévoient au moins une position de chargement et une position de façonnage, dans laquelle les unités de serrage (1 à 8) peuvent être déplacées en hauteur, pour former un espace d'accès en dessous des bras de serrage (14) ou des ponts de serrage (12, 13).

7. Dispositif de maintien selon l'une quelconque des revendications 1 à 6, **caractérisé en ce que** le bras de serrage (14) présente au moins une fixation individuelle (22).

8. Dispositif de maintien selon l'une quelconque des revendications 1 à 7, **caractérisé en ce que** le bras de serrage (14) est aménagé sur une potence (15) déplaçable parallèlement à la direction principale de façonnage.

9. Dispositif de maintien selon l'une quelconque des revendications 1 à 8, **caractérisé en ce que** le bras de serrage (14) d'au moins une unité de serrage (2 à 7), qui forme un contour gênant pour la machine de façonnage au cours de l'opération de façonnage, peut être dégagé du soutien de la pièce (21) indépendamment des bras de serrage (14) des autres unités de serrage de sorte que le bras ne dépasse pas dans la zone de travail de la machine (16).

10. Dispositif de maintien selon l'une quelconque des revendications 7 à 9, **caractérisé en ce que** les fixations individuelles (22; 28) peuvent être déplacées perpendiculairement à la direction principale de façonnage (direction y) le long du bras de serrage (14) et présentent des éléments de fixation de pièce (23; 281) déplaçables en hauteur.

11. Dispositif de maintien selon l'une quelconque des revendications 7 à 10, **caractérisé en ce que** la fixation individuelle (22) se présente sous la forme d'une unité d'aspiration (28), dans laquelle on atteint un positionnement "flottant" de la pièce au moyen d'air comprimé et/ou une force de maintien de pièce au moyen d'une dépression sur la tête d'aspiration (281).

12. Dispositif de maintien selon l'une quelconque des revendications 1 à 11, **caractérisé en ce qu'**au moins un pont de serrage (12) est aménagé à l'intérieur du système de rails (11) de sorte que les unités de serrage internes (2 à 7) puissent être dégagées de la zone de travail de la machine (16) sur le système de rails (11) sur les colonnes terminales (151, 151') et que, par suite, le nombre des unités de serrage utilisées puisse varier.

13. Dispositif de maintien selon l'une quelconque des revendications 1 à 12, **caractérisé en ce que** les bras de serrage (14) et les ponts de serrage (12, 13) sont reliés via des lignes de commande et peuvent être programmés pour pouvoir se déplacer dans le sens de la hauteur vers le haut ou vers le bas individuellement ou en synchronisme l'un avec l'autre.

14. Dispositif de maintien selon l'une quelconque des revendications 1 à 13, **caractérisé en ce que** les bras de serrage (14) présentent au moins respectivement un axe de pivotement (33) pour le chargement d'une pièce mise en place verticalement.

15. Dispositif de maintien selon l'une quelconque des revendications 1 à 14, **caractérisé en ce que** les bras de serrage (14) d'au moins une série de fixations (unités de serrage 143, 145, 147) présentent, près de leurs axes de pivotement (103), des logements de chargement (31) réglables en fonction du contour et de la dimension de la pièce pour soutenir une pièce mise en place verticalement.

16. Dispositif de maintien selon l'une quelconque des revendications 1 à 15, **caractérisé en ce qu'**au moins un bras de serrage (14) présente un télescopique (29) en tant que prolongement du bras.

17. Dispositif de maintien selon l'une quelconque des revendications 1 à 16, **caractérisé en ce qu'**il est prévu un logement de chargement (30) dans la zone de la tête (14) du bras de serrage ou sur le bras télescopique (29).

18. Dispositif de maintien selon l'une quelconque des revendications 1 à 17, **caractérisé en ce que** les logements de chargement (30, 31) peuvent être préréglés par voie manuelle, motorisée ou par un programme de commande numérique de pièces sur le système de maintien en fonction des dimensions, de la géométrie et de la position souhaitée de la pièce.

19. Dispositif de maintien selon l'une quelconque des revendications précédentes, **caractérisé en ce que**, dans le cas d'une pièce correspondante plus étroite que la demi-largeur de travail de la machine (16), celle-ci est agencée sur une série de fixations (143, 145, 147) du dispositif de maintien (10), tandis qu'une autre pièce étroit correspondante est agencée sur l'autre série de fixations (142, 144, 146).

20. Machine de façonnage (16) comprenant un outil supérieur et un outil inférieur (17, 18), de préférence sous la forme d'une machine de rivetage orbital, qui est couplée à un dispositif de maintien (10) selon l'une quelconque des revendications précédentes, **caractérisé en ce que** la machine (16) peut traverser les unités de serrage (1 à 8) avec l'outil supérieur (17) et avancer avec l'outil inférieur (18) latéralement sur les potences (15) des unités de serrage (1 à 8).

21. Procédé de façonnage de pièces de grandes dimensions, dans lequel un façonnage est réalisé avec un outil supérieur et un outil inférieur et un dispositif de maintien selon l'une quelconque des revendications 1 à 19 soutient les pièces des grandes dimensions, **caractérisé en ce que** :
- en position de travail, un nombre minimal de bras de serrage sont retirés de la zone de travail des outils (17, 18) pour faire place à la machine (16) pour l'exécution de son cycle de travail dans la zone d'un bras de serrage (14),
- tandis qu'un nombre le plus grand possible de bras de serrage (14) soutiennent par ailleurs simultanément la pièce (21).

22. Procédé de chargement du dispositif de maintien selon l'une quelconque des revendications 1 à 19 par des pièces guidées verticalement, selon les étapes suivantes :
- les unités de serrage (1-8) sont amenées en position de chargement, où, au moins dans une série de fixations (unités de serrage 143, 145, 147), les bras de serrage (14) sont soumis à un pivotement vers le haut.
- la pièce (21) est appliquée sur le logement de chargement externe (31),
- la pièce (21) est pressée sur le logement de chargement interne (30),
- la pièce (21) est dégagée du dispositif d'acheminement et est supportée uniquement par le dispositif de maintien (10),
- les bras de serrage (14) qui ont pivoté vers le haut sont abaissés jusqu'à atteindre un support de la pièce par l'autre série de fixations (unités de serrage 142, 144, 146),
- la pièce (21) est fixée et verrouillée côté frontal, et
- la pièce est soutenue et maintenue par les fixations de pièce (22; 28).
